(19) Europäisches Patentamt
European Patent Office
Office européen des brevets

(11) **EP 2 615 054 B1**

(12) **EUROPEAN PATENT SPECIFICATION**

(45) Date of publication and mention
of the grant of the patent:
**06.06.2018 Bulletin 2018/23**

(21) Application number: **10856982.3**

(22) Date of filing: **09.09.2010**

(51) Int Cl.:
***B66B 7/06*** *(2006.01)*      ***D07B 1/16*** *(2006.01)*

(86) International application number:
**PCT/JP2010/065516**

(87) International publication number:
**WO 2012/032633 (15.03.2012 Gazette 2012/11)**

(54) **ROPE FOR ELEVATOR**

SEIL FÜR EINEN AUFZUG

CÂBLE POUR ASCENSEUR

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**17.07.2013 Bulletin 2013/29**

(73) Proprietor: **Mitsubishi Electric Corporation
Tokyo 100-8310 (JP)**

(72) Inventors:
• **MURAI, Michio
Tokyo 100-8310 (JP)**
• **MITSUI, Atsushi
Tokyo 100-8310 (JP)**

(74) Representative: **Hoffmann Eitle
Patent- und Rechtsanwälte PartmbB
Arabellastraße 30
81925 München (DE)**

(56) References cited:
**EP-A1- 1 728 916**      **WO-A1-2006/061888**
**WO-A1-2010/071061**      **JP-A- 6 057 662**
**JP-A- 2005 042 229**

• **Anja Oltmanns: "Dem Gummi auf der Spur",
Kunststoff-International.com, 1 January 2008
(2008-01-01), pages 38-42, XP055321821,
Retrieved from the Internet:
URL:http://www.kraussmaffei.de/media/files
/kmdownloadlocal/de/Gummi_Spur.pdf
[retrieved on 2016-11-22]**

**Description**

TECHNICAL FIELD

The present invention relates to an elevator rope for suspending an elevator car.

BACKGROUND ART

A sheave having a diameter 40 times or more the diameter of a rope has been conventionally used in an elevator apparatus in order to prevent early abrasion or breakage of the rope. Therefore, in order to reduce the diameter of the sheave, it is also necessary to make the diameter of the rope smaller. However, if the diameter of the rope is made smaller without changing the number of ropes, then load of baggage that can be loaded in the car or passengers getting on and off the car is decreased due to a decrease in load capacity of the rope. Further, an increase in the number of ropes results in a complicated structure of the elevator apparatus. In addition, if the diameter of a driving sheave is made smaller, repeated bending fatigue of the rope increases. As a result, the rope needs to be replaced frequently.

As means for solving such problems, it has been proposed to use a rope obtained by: twisting a plurality of steel wires together to form strands; twisting a plurality of the strands together to form a wire rope; and covering the outermost periphery of the wire rope with a resin material (for example, see Patent Document 1). An elevator using such rope is driven by a frictional force between a sheave and the resin material forming the outermost periphery. Therefore, it is desired to stabilize or improve the friction characteristics of the resin material. Accordingly, in order to improve the friction characteristics of an elevator rope, it has been proposed to use a rope covered with a polyurethane covering material containing no wax (for example, see Patent Document 2) .

On the other hand, in order to reduce the friction coefficient between a sheave and a belt to a predetermined level, a flat belt covered with a polyether-based polyurethane elastomer including a isoparaffinic wax of low oil content has been proposed (for example, see Patent Document 3) .

Further, in order to obtain a rope and belt having a friction coefficient which is not significantly reduced under the condition that oil adheres to the contact surface between a sheave and a rope or belt and less-wearing of a resin covering body at sliding, a rope and belt covered with a resin covering body comprising a resin base material for a rope and belt and insoluble solid additive particles, in particular, insoluble solid additive particles with a hardness higher than the hardness of the surface material of a sheave has been proposed (for example, see Patent Document 4).

In general, the friction coefficient of a resin material is known to heavily depend on sliding velocity and temperature. Further, viscoelastic characteristics such as dynamic viscoelasticity of the resin material are known to have velocity and temperature dependencies which can be converted into each other (Williams-Landel-Ferry equation (WLF equation)). In addition, such conversion is achieved for the sliding velocity and temperature as well in the case of rubber friction, and hence it has been shown that the viscoelastic characteristics of rubber are involved in the friction characteristics of the rubber (for example, see Non Patent Document 1).

[Patent Document 1] Japanese Patent Laid-Open No. 2001-262482
[Patent Document 2] Japanese Patent Laid-Open No. 2004-538382
[Patent Document 3] WO 2007/128622
[Patent Document 4] Japanese Patent Laid-Open No. 2009-234791

[Non Patent Document 1] Grosch, K. A.: Proc. Roy. Soc., A274, 21 (1963)

SUMMARY OF INVENTION

TECHNICAL PROBLEM

As is clear from the above-mentioned facts, even in the polyurethane covering material containing no wax described in Patent Document 2, the friction coefficient of the material itself varies depending on the sliding velocity and temperature, and hence there has been a problem in that it is impossible to stably control an elevator. Further, as described in Non Patent Document 1, the friction coefficient of rubber has a maximal value for the sliding velocity. In order to stop an elevator for a long period of time, it is necessary to maintain the static condition of a car by the frictional force between a rope and a sheave. However, such conventional covering material having a large variation in friction coefficient and the covering material including a isoparaffinic wax of low oil content as described in Patent Document 3 have a problem in that the friction coefficient cannot be secured at a certain level or more at a low sliding velocity, resulting in a misalignment of the stop position of the car with time. Meanwhile, in order to perform an emergency stop or sudden stop of the elevator in operation, it is necessary to brake the elevator by the frictional force between the rope and the sheave, but the conventional covering materials as described in Patent Documents 1 to 4 may cause a decrease in strength or melting by frictional heat. As a result, there has been a problem in that the friction coefficient between the rope and the sheave decreases significantly.

Therefore, the present invention has been made to solve the above-mentioned problems, and an object of the present invention is to obtain an elevator rope which has a stable friction coefficient that does not depend on temperature or sliding velocity.

SOLUTION TO PROBLEM

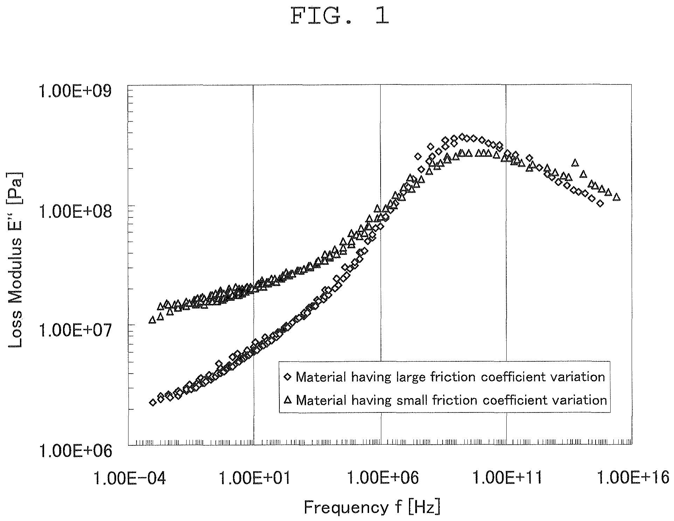

The inventors of the present invention have made studies on frictional characteristics of a variety of resin materials. FIG. 1 is an example of results illustrating frequency dependency of loss modulus in materials having different sliding velocity dependency of friction coefficients. As is clear from FIG. 1, the inventors have found that a material having small sliding velocity dependency of the friction coefficient has small frequency dependency of the loss modulus in a viscoelastic master curve. Based on such findings, the inventors have studied the compositions of resin materials, and as a result, have found that, in order to reduce both the frequency dependency of the loss modulus and sliding velocity dependency of the friction coefficient, it is useful to use, as a layer for covering the periphery of a rope main body, a cross-linked product of a resin composition obtained by adding a vinyl compound having two or more vinyl groups per molecule to a thermoplastic polyurethane elastomer or a resin composition comprising a thermoplastic polyurethane elastomer obtained from an organic polyisocyanate, a polyol having a vinyl group for each molecule and a chain extender, thus completing the present invention.

That is, the present invention is an elevator rope, comprising: a rope main body; and a covering resin layer that covers the periphery of the rope main body, the covering resin layer comprising a cross-linked product of a resin composition, wherein the resin composition comprises a thermoplastic polyurethane elastomer and a cross -linking aid consisting of a vinyl compound having two or more vinyl groups per molecule.

Further, the present invention is an elevator rope, comprising: a rope main body; and a covering resin layer that covers the periphery of the rope main body, the covering resin layer comprising a cross-linked product of a resin composition, wherein the resin composition comprises a thermoplastic polyurethane elastomer obtained from a polyol having a vinyl group for each molecule, an organic polyisocyanate and a chain extender.

ADVANTAGEOUS EFFECTS OF THE INVENTION

According to the present invention, it is possible to obtain an elevator rope which has a stable friction coefficient that does not depend on temperature or the sliding velocity by using, as a layer for covering the periphery of a rope main body, a cross-linked product of a resin composition comprising the thermoplastic polyurethane elastomer and the cross-linking aid consisting of the vinyl compound having two or more vinyl groups per molecule or a resin composition comprising the thermoplastic polyurethane elastomer obtained from the polyol having a vinyl group for each molecule, the organic polyisocyanate and the chain extender.

BRIEF DESCRIPTION OF THE DRAWINGS

Figure 1 is an example of results illustrating frequency dependency of loss modulus in materials having different sliding velocity dependency of friction coefficients (viscoelastic master curves).

Figure 2 is a conceptual diagram of an apparatus for measuring the friction coefficient in a small sliding velocity range used in the Examples.

Figure 3 is a conceptual diagram of an apparatus for measuring the friction coefficient at the time of an emergency stop used in the Examples.

Description of Embodiments

Embodiments of the present invention are described below.

Embodiment 1

An elevator rope according to Embodiment 1 of the present invention is characterized in that the periphery of a rope main body is covered with a cross-linked product of a resin composition comprising a thermoplastic polyurethane elastomer and a cross-linking aid consisting of a vinyl compound having two or more vinyl groups per molecule.

Examples of the thermoplastic polyurethane elastomer used in this embodiment include an ester-based thermoplastic polyurethane elastomer, an ether-based thermoplastic polyurethane elastomer, an ester-ether-based thermoplastic polyurethane elastomer, and a carbonate-based thermoplastic polyurethane elastomer. The elastomers may be used alone or in combinations of two or more kinds thereof.

Of those thermoplastic polyurethane elastomers, an ether-based thermoplastic polyurethane elastomer is preferably used to prevent hydrolysis which occurs in a usage environment. In consideration of flexibility and durability of the elevator rope, a polyether-based thermoplastic polyurethane elastomer having a JIS A hardness (hardness specified by JIS K7215 using a type A durometer) of 85 or more and 95 or less is more preferably used.

Meanwhile, from the viewpoint of workability such as the mixing of the vinyl compound having two or more vinyl groups per molecule, a thermoplastic polyurethane elastomer processed into pellets is preferably used.

The cross-linking aid used in this embodiment may be any vinyl compound which has two or more vinyl groups per molecule, and can be appropriately selected from a lot of well-known vinyl compounds depending on the situation. In this embodiment, in consideration of obtainability, compatibility and cross-linking performance with the thermoplastic polyurethane elastomer and the properties of the cross-linked product obtained, diacrylate monomers, dimethacrylate monomers, triacrylate monomers and trimethacrylate monomers are preferable.

Examples of the diacrylate monomers include: polyethylene glycol diacrylate, polypropylene glycol diacrylate, polytetramethylene glycol diacrylate, 1,6-hexanediol diacrylate, neopentyl glycol diacrylate, tripropylene glycol diacrylate, 2,2-bis[4-(acryloxydiethoxy)phenyl]propane and the like.

Examples of the dimethacrylate monomers include: ethylene glycol dimethacrylate, diethylene glycol dimethacrylate, triethylene glycol dimethacrylate, polyethylene glycol dimethacrylate, polytetramethylene glycol dimethacrylate, 1,3-butylene glycol dimethacrylate, 1,6-hexanediol dimethacrylate, neopentyl glycol dimethacrylate, propylene glycol dimethacrylate, polypropylene glycol dimethacrylate, 2-hydroxy-1,3-dimethacryloxypropane, 2,2-bis[4-(methacryloxyethoxy)phenyl]propane, 2,2-bis[4-(methacryloxydiethoxy)phenyl]propane, 2,2-bis[4-(methacryloxypolyethoxy)phenyl]propane and the like.

Examples of the triacrylate and trimethacrylate monomers include: trimethylol propane triacrylate, tetramethylol methane triacrylate, trimethylol propane trimethacrylate and the like.

Commercially available compounds may be used as these compounds.

In this embodiment, the cross-linking aid described above may be used alone or in combinations of two or more kinds thereof. In this embodiment, the blending ratio of the thermoplastic polyurethane elastomer and the cross-linking aid consisting of a vinyl compound having two or more vinyl groups per molecule varies depending on the types of the thermoplastic polyurethane elastomer and the vinyl compound used. The ratio may be appropriately adjusted so that the cross-linked product obtained by cross linking a resin composition has a JIS A hardness of 98 or less and a glass transition temperature of -20°C or less. For example, in the case of using a polyether-based thermoplastic polyurethane elastomer having a JIS A hardness of 95 as the thermoplastic polyurethane elastomer and trimethylol propane trimethacrylate as the cross-linking aid, the cross-linking aid is preferably blended in an amount in the range of 2 to 7 parts by weight with respect to 100 parts by weight of the thermoplastic polyurethane elastomer. When the amount of the cross-linking aid is less than 2 parts by weight, the cross-linking may not be enough, and thus there is a case where the effect of stabilizing a friction coefficient that does not depend on temperature or the sliding velocity may not be shown sufficiently. On the other hand, when the amount of the cross-linking aid is more than 7 parts by weight, effects commiserate with the amount added may not be obtained, it is not economically effective and there is a case where the other properties of the cross-linked product may be reduced.

The covering resin layer used in this embodiment is obtained by: mixing the thermoplastic polyurethane elastomer with the cross-linking aid consisting of a vinyl compound having two or more vinyl groups per molecule using well-known methods, for example, a mixing method using a kneading machine such as an extruder, a mixing roll, Banbury mixer or a kneader to prepare a resin composition; molding the resin composition as a covering resin layer for covering the periphery of a rope main body using well-known methods, for example, a molding method using a molding machine such as an extrusion molding machine or an injection molding machine; and conducting a cross-linking treatment.

As the cross-linking treatment, a heating treatment, an electron beam irradiation treatment or combinations thereof is conducted. Conditions for the cross-linking treatment may vary in accordance with the kind and the amount of cross-linking aid used, and the heating treatment is preferably conducted by usually holding the temperature at 70°C to 130°C for 1 to 24 hours. When the heating temperature is less than 70°C or the holding time is less than 1 hour, there are cases where the cross-linking may not be enough. On the other hand, when the heating temperature is more than 130°C or the holding time is more than 24 hours, further curing barely proceeds, and there are cases where the mechanical properties of the cross-linked product may be reduced. Further, the electron beam irradiation treatment is preferably conducted at irradiance in the range of 10 kGy to 1000 kGy (kilogray) . When irradiance is less than 10 kGy, there are cases where the cross-linking may not be enough. On the other hand, when irradiance is more than 1000 kGy, further curing barely proceeds, it is not economically effective and there are cases where the mechanical properties of the cross

-linked product may be reduced. The electron beam irradiation treatment is usually conducted at room temperature. If desired, the electron beam irradiation treatment may be conducted while being heated to an appropriate temperature. When the heating treatment is combined with the electron beam irradiation treatment, the order of the treatments is not particularly limited, and either may be conducted first.

According to Embodiment 1, it is possible to obtain an elevator rope having a small variation in the friction coefficient in a wide range of sliding velocities from a small sliding velocity range required for maintaining a static condition of an elevator car to a large sliding velocity range during emergency or sudden stops of an elevator in operation.

Embodiment 2

An elevator rope according to Embodiment 2 of the present invention is characterized in that the periphery of a rope main body is covered with a cross-linked product of a resin composition comprising a thermoplastic polyurethane elastomer obtained from a polyol having a vinyl group for each molecule, an organic polyisocyanate and a chain extender.

Examples of the polyol having a vinyl group for each molecule, which is used in this embodiment, include: polybutadiene polyol, polyisoprene polyol and the like. The number average molecular weight of the polyol is not particularly limited, but is usually in the range of 500 to 5,000. Of those polyols, in consideration of obtainability, polybutadiene polyol and polyisoprene polyol are preferable.

Conventionally used organic polyisocyanates may be used as the organic polyisocyanate used in this embodiment. Examples of the organic polyisocyanate include: tolylene diisocyanate, diphenylmethane diisocyanate, phenylene diisocyanate, isophorone diisocyanate, hexamethylene diisocyanate and the like. The organic polyisocyanates may be used alone or in combinations of two or more kinds thereof. Of those organic polyisocyanates, in consideration of economic efficiency and the mechanical properties of the cross-linked product obtained, an aromatic polyisocyanate such as tolylene diisocyanate and diphenylmethane diisocyanate is preferable.

Conventionally used chain extenders may be used as the chain extender used in this embodiment. Examples of the chain extender include : glycols such as ethylene glycol, butanediol, 2-ethyl-1,3-hexanediol and diethylene glycol, amines such as diethanolamine, triethanolamine, tolylenediamine and hexamethylendiamine, and the like.

Materials described in Japanese Patent Laid-Open No. 2008-106188 may be used as a rawmaterial for the thermoplastic polyurethane elastomer.

The thermoplastic polyurethane elastomer is manufactured by well - known methods using the above -mentioned raw materials, for example, a method described in Japanese Patent Laid-OpenNo. 2008-106188 comprising the steps of: reacting the organic polyisocyanate with the polyol to prepare a prepolymer; and reacting the prepolymer with the chain extender.

Reaction ratios of the organic polyisocyanate, the polyol having a vinyl group for each molecule and the chain extender may vary in accordance with the kind of raw materials used. In consideration of flexibility and durability of the elevator rope, the ratio may be appropriately adjusted so that the thermoplastic polyurethane elastomer obtained has a JIS A hardness of 85 or more and 95 or less.

The covering resin layer used in this embodiment is obtained by: molding a resin composition comprising the above-mentioned thermoplastic polyurethane elastomer as a covering resin layer for covering the periphery of a rope main body using well-known methods, for example, a molding method using a molding machine such as an extrusion molding machine or an injection molding machine; and conducting a cross-linking treatment. In order to further stabilize the friction coefficient against temperature or sliding velocity, a cross-linking aid as exemplified in Embodiment 1 may be added to the thermoplastic polyurethane elastomer. In this case, a resin composition obtained by mixing the thermoplastic polyurethane elastomer with the cross-linking aid using well-known methods, for example, a mixing method using a kneading machine such as an extruder, a mixing roll, Banbury mixer or a kneader may be fed into a molding machine. Further, the same conditions as for the cross-linking treatment described in Embodiment 1 can be used.

According to Embodiment 2, it is possible to obtain an elevator rope having a small variation in the friction coefficient in a wide range of sliding velocities from a small sliding velocity range required for maintaining a static condition of an elevator car to a large sliding velocity range during emergency or sudden stops of an elevator in operation.

In order to further stabilize the friction coefficient against temperature or sliding velocity, inorganic fillers can be further added to the resin compositions described in Embodiments 1 and 2. Examples of the inorganic filler include: a spherical inorganic filler such as calcium carbonate, silica, titanium oxide, carbon black, acetylene black, or barium sulfate; a fibrous inorganic filler such as a carbon fiber or a glass fiber; and a plate-like inorganic filler such as mica, talc, or bentonite. The fillers may be used alone or in combinations of two or more kinds thereof. Of those, in order to reduce variations in the friction coefficient, a fibrous inorganic filler and a plate-like inorganic filler are preferably used. A hardness of the inorganic fillers is not particularly limited. The amount of the inorganic fillers added may be appropriately adjusted so that the cross-linked product obtained by cross-linking the resin composition has a JIS A hardness of 98 or less and a glass transition temperature of -20°C or less.

The reason why the JIS A hardness of the cross-linked product is specified as 98 or less is that studies by the inventors have revealed that, in the case where the hardness is more than 98, the flexibility of the rope is liable to be impaired, resulting in an increase in power consumption during driving of an elevator using such rope. The JIS A hardness of the cross-linked product is more preferably 85 or more and 95 or less.

Meanwhile, the reason why the glass transition temperature of the cross-linked product (sliding velocity dependency of the friction coefficient becomes smaller as the glass transition temperature of the cross-linked product increases, while the elastic modulus of the cross-linked product becomes larger as the glass transition temperature of the cross-linked product increases) is specified as -20°C or less is that studies by the inventors have revealed that, in the case where a cross-linked product having a higher glass transition temperature is employed for an elevator rope as the covering resin layer, the flexibility of the rope is liable to be decreased or fatigue failure such as cracking of the covering resin layer is liable to occur due to stress applied to the covering resin layer when the rope is bent repeatedly in an environment having a temperature higher than the glass transition temperature of the cross-linked product. The glass transition temperature of the cross-linked product is more preferably -25°C or less.

It should be noted that the elevator ropes according to Embodiments 1 and 2 are characterized by the resin material of the outermost layer that covers the periphery of the rope main body. Therefore, the structure of the rope main body is not particularly limited, but in general, the rope main body contains strands or cords formed by twisting a plurality of steel wires together as a load-supporting member. The rope main body in these embodiments may have a belt shape including the above-mentioned strands or cords. Meanwhile, in order to improve adhesion between the rope main body and the covering resin layer, an adhesive for metal and polyurethane such as Chemlok (registered trademark) 218 (manufactured by LORD Far East, Inc.) is preferably applied in advance to the above-mentioned strands or cords.

EXAMPLES

Hereinafter, the present invention is described in more detail by way of Examples and Comparative Examples, but is not limited by the examples.

<Method of manufacturing elevator ropes>

Resin compositions having the compositions described in Table 1 were supplied to an extrusion molding machine, respectively, to thereby cover the periphery of rope main bodies with the resin compositions. The rope main bodies were covered with the resin compositions, respectively and then the resin compositions were irradiated with 150 kGy using a 10 MeV electron beam from an electron beam irradiation apparatus. The rope main bodies were heated at 100°C for 2 hours in order to accelerate the cross-linking reaction and curing of an adhesive, to thereby obtain elevator ropes having a diameter of 12 mm. It should be noted that the resultant elevator rope had the cross-sectional structure described in FIG. 1 of WO 2003/050348 A1. Here, the rope main body corresponds to the elevator rope including: the inner layer rope having a plurality of core strands in each of which a plurality of steel wires are twisted together and a plurality of inner layer strands in each of which a plurality of steel wires are twisted together; the inner layer cladding made of a resin and covering the periphery of the inner layer rope; and the outer layer rope provided in a peripheral portion of the inner layer cladding and having a plurality of outer layer strands in each of which a plurality of steel wires are twisted together, and the covering resin layer corresponds to the outer layer cladding. Before covering the rope main body with the covering resin layer, Chemlok (registered trademark) 218 (manufactured by LORD Far East, Inc .) was applied to the peripheral strands of the rope main body and dried.

[JIS A hardness of covering resin layer]

According to JIS K7215, a type A durometer was used to measure durometer A hardness. The results are shown in Table 1.

[Measurement of glass transition temperature (Tg) of covering resin layer]

The glass transition temperature (Tg) of the covering resin layer was measured as follows . A resin composition having the same composition as that of the covering resin layer used in each of the Examples and Comparative Examples was supplied to an extrusion molding machine and molded into a plate having a size of 100 mm×100 mm×thickness 2 mm, followed by heating at 100°C for 2 hours, and then a test piece having a size of 50 mm×10 mm×thickness 2 mm was cut off from the center portion of the plate. The loss modulus of the test piece was measured using a viscoelastic spectrometer DMS120 manufactured by Seiko Instruments Inc. under conditions of deformation mode: bending mode, measurement frequency: 10 Hz, temperature increase rate: 2°C/min, and vibration amplitude: 10 $\mu$m, and the peak temperature of the loss modulus was adopted as Tg. The results are shown in Table 1.

[Measurement of friction coefficient of rope]

(1) Measurement method in low sliding velocity range and sliding velocity range during normal operation

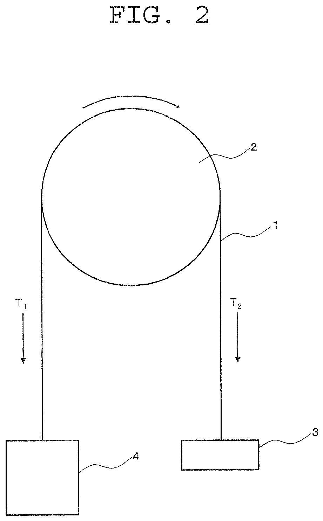

FIG. 2 is a conceptual diagram of an apparatus for measuring the friction coefficient in a low sliding velocity range. As illustrated in FIG. 2, an elevator rope 1 obtained in each of the Examples and Comparative Examples was twisted 180 degrees around a sheave 2, and one end thereof was fixed on a measurement apparatus 3. The other end was connected to a weight 4, and a tension was applied to the elevator rope 1. Here, when the sheave 2 was rotated in a clockwise direction at a predetermined rate, rope tension on the fixed side ($T_2$) loosens just for the friction force between the elevator rope 1 and the sheave 2, resulting in a tension difference from rope tension on the weight side ($T_1$). The rope tension on the weight side ($T_1$) and rope tension on the fixed side ($T_2$) were measured using a load cell provided on the connection part between the rope and the weight. The low sliding velocity was defined as $1 \times 10^{-5}$ mm/s, the sliding velocity at the time of maintaining a static condition of an elevator car was defined as 1 mm/s, and $T_1$ and $T_2$ (provided that $T_1 > T_2$), a contact angle of the rope on the sheave $\theta$ (=180 degrees), and a coefficient $K_2$ (=1.19) determined by the shape of the groove of the sheave were substituted into the following equation 1, to thereby determine a friction coefficient $\mu_1$ between the elevator rope 1 and the sheave 2. The results are shown in Table 1. The measurement was conducted under 25°C.

$$\mu_1 = \frac{\ln(T_1 / T_2)}{K_2 \theta} \qquad \text{(Equation 1)}$$

(2) Measurement method in large sliding velocity range at the time of an emergency stop

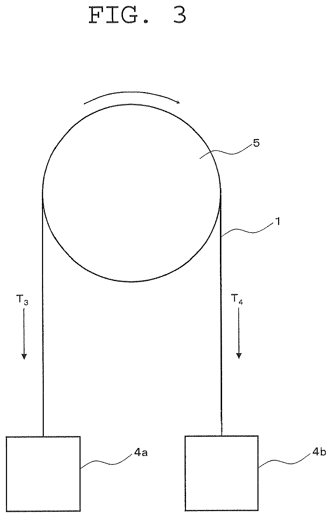

FIG. 3 is a conceptual diagram of an apparatus for measuring a friction coefficient in a large sliding velocity range at the time of an emergency stop. The elevator rope 1 obtained in each of the Examples and Comparative Examples was twisted 180 degrees around a driving sheave 5. One end thereof was connected to a weight 4a, and the other end was connected to a weight 4b having a larger mass than the weight 4a. The driving sheave 5 was rotated in a clockwise direction to raise the weight 4a, and the driving sheave 5 was suddenly stopped when the rope speed reached 4 m/s, to thereby have the elevator rope 1 slip against the driving sheave 5. In this case, the minimum deceleration $\alpha$ of the weight 4a, the tension on the weight 4a side ($T_3$), and the tension on the weight 4b side ($T_4$) were measured using a load cell provided on the connection part between the rope and the weight, and the resultant values were substituted into the following equation 2, to thereby determine a minimum friction coefficient $\mu_2$ during slipping. The results of a test are shown in Table 1. The measurement was conducted under 25°C.

$$\mu_2 = \frac{\ln(T_4(1 + \alpha / g) \diagup T_3(1 + \alpha / g))}{K_2 \theta} \qquad \text{(Equation 2)}$$

Here, $K_2$ represents the same value as that used in the measurement method in the low sliding velocity range, g represents a gravity constant (=9.80665 m/s$^2$), and $\theta$ represents a contact angle of the rope on the sheave (=180 degrees).

Table 1

| | | Example | | | | | | | | | | | | | Comparative Example | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 1 | 2 | 3 |
| Resin composition | TPU 1 (parts by weight) | 100 | | | | | | | | | | | | | 100 | | |
| | TPU 2 (parts by weight) | | 100 | | | | | | | | | | | | | 100 | |
| | TPU 3 (parts by weight) | | | 100 | 100 | 100 | 100 | 100 | 100 | | | | | | | | 100 |
| | TPU 4 (parts by weight) | | | | | | | | | 100 | 100 | 100 | 100 | 100 | | | |
| | Cross-linking aid 1 (parts by weight) | 5 | 5 | 5 | | | 5 | 5 | 5 | | | | | 5 | | | |
| | Cross-linking aid 2 (parts by weight) | | | | 8 | | | | | | | | | | | | |
| | Cross-linking aid 3 (parts by weight) | | | | | 15 | | | | | | | | | | | |
| | Titanium dioxide (parts by weight) | | | | | | 10 | | | | 10 | | | | | | |
| | Glass fiber (parts by weight) | | | | | | | 5 | | | | | 5 | | | | |
| | Talc (parts by weight) | | | | | | | | 10 | | | | 10 | | | | |
| JIS A hardness | | 87 | 92 | 97 | 97 | 96 | 97 | 98 | 97 | 95 | 95 | 97 | 95 | 97 | 85 | 90 | 95 |
| Glass transition temperature (°C) | | -38 | -32 | -28 | -28 | -30 | -24 | -23 | -25 | -40 | -38 | -35 | -38 | -36 | -43 | -40 | -30 |
| Friction properties | Normal operation | ◎ | ◎ | ◎ | ◎ | ◎ | ◎ | ◎ | ◎ | ◎ | ◎ | ◎ | ◎ | ◎ | ◎ | ◎ | ◎ |
| | Maintaining static condition | △ | ○ | ○ | ○ | ○ | ○ | ○ | ○ | ○ | ○ | ○ | ○ | ○ | × | × | × |
| | Emergency stop | △ | △ | △ | △ | △ | ○ | ◎ | ◎ | △ | ○ | ◎ | ◎ | ○ | × | × | × |

Here, in Table 1, TPU1 is an ether-based thermoplastic polyurethane elastomer having a JIS A hardness of 85, which is obtained from diphenylmethane diisocyanate, polytetramethylene glycol and butanediol, TPU 2 is an ether-based thermoplastic polyurethane elastomer having a JIS A hardness of 90, which is obtained from diphenylmethane diisocyanate, polytetramethylene glycol and butanediol, TPU 3 is an ether-based thermoplastic polyurethane elastomer having a JIS A hardness of 95, which is obtained from diphenylmethane diisocyanate, polytetramethylene glycol and butanediol, TPU4 is an olefin-based thermoplastic polyurethane elastomer having a JIS A hardness of 95, which is obtained from diphenylmethane diisocyanate, polybutadiene polyol (having a number average molecular weight of 2,000) and 2-ethyl-1,3-hexanediol, Cross-linking aid 1 is trimethylol propane trimethacrylate, Cross-linking aid 2 is 1, 6-hexanediol dimethacrylate, and Cross-linking aid 3 is a polypropylene glycol dimethacrylate obtained by reacting methacrylic acid with polypropylene glycol having an average molecular weight of 400. Titan dioxide, glass fiber (fiber length of 1mm) and talc are used as an inorganic filler.

The friction coefficient measured according to each measurement method of less than 0.15 was determined as ×, the friction coefficient according to each measurement method of 0.15 or more to less than 0.2 was determined as Δ, the friction coef f icient according to each measurement method of 0.2 or more to less than 0.25 was determined as ○, and the friction coefficient according to each measurement method of 0.25 or more to 0.6 or less was determined as ◎. In addition, no Examples and Comparative Examples indicated a friction coefficient of more than 0.6.

As is clear from the results shown in Table 1, the friction coefficients in the low sliding velocity range ($1 \times 10^{-5}$ mm/s) and at the time of an emergency stop, determined using the elevator ropes obtained in the Examples and Comparative Examples, were found to have a tendency of being lower than the friction coefficients during normal operation.

The elevator ropes obtained in the Examples were found to have friction coefficients of 0.15 or more in the low sliding velocity range and at the time of an emergency stop. In particular, in Examples 6 to 8 where the inorganic filler, TPU 3 and the cross-linking aid were used in combination and Examples 10 to 12 where the inorganic filler and TPU 4 were used in combination, variations in the friction coefficients were found to be small. Of those, in Examples 7 and 11 where a fibrous inorganic filler such as the glass fiber was added thereto and Examples 8 and 12 where a plate-like inorganic filler such as talc was added thereto, variations in the friction coefficients were found to be very small.

On the other hand, in the cases of all the elevator ropes obtained in the Comparative Examples, the problem that the friction coefficients in the low sliding velocity range and at the time of an emergency stop were too low.

REFERENCE SIGNS LIST

1 elevator rope, 2 sheave, 3 measurement apparatus, 4, 4a, 4bweight, 5 driving sheave.

## Claims

1. An elevator rope (1), comprising: a rope main body; and a covering resin layer that covers the periphery of the rope main body, the covering resin layer comprising a cross-linked product of a resin composition, wherein the resin composition comprises a thermoplastic polyurethane elastomer and a cross-linking aid consisting of a vinyl compound having two or more vinyl groups per molecule.

2. An elevator rope (1), comprising: a rope main body; and a covering resin layer that covers the periphery of the rope main body, the covering resin layer comprising a cross-linked product of a resin composition, wherein the resin composition comprises a thermoplastic polyurethane elastomer obtained from a polyol having a vinyl group for each molecule, an organic polyisocyanate and a chain extender.

3. An elevator rope (1) according to claim 1 or 2, wherein the resin composition further comprises inorganic fillers.

4. An elevator rope (1) according to claim 3, wherein the inorganic fillers are in either fibrous or plate-like form.

## Patentansprüche

1. Aufzugsseil (1), umfassend: einen Seilhauptkörper; und eine Abdeckharzschicht, die den Umfang des Seilhauptkörpers bedeckt, wobei die Abdeckharzschicht ein quervernetztes Produkt einer Harzzusammensetzung umfasst, wobei die Harzzusammensetzung ein thermoplastisches Polyurethanelastomer und ein Quervernetzungshilfsmittel, das aus einer Vinylverbindung mit zwei oder mehreren Vinylgruppen pro Molekül besteht, umfasst.

2. Aufzugsseil (1), umfassend: einen Seilhauptkörper; und eine Abdeckharzschicht, die den Umfang des Seilhauptkörpers bedeckt, wobei die Abdeckharzschicht ein quervernetztes Produkt einer Harzzusammensetzung umfasst, wobei die Harzzusammensetzung ein thermoplastisches Polyurethanelastomer umfasst, das aus einem Polyol mit einer Vinylgruppe in jedem Molekül, einem organischen Polyisocyanat und einem Kettenverlängerungsmittel erhalten wird.

3.  Aufzugseil (1) gemäß Anspruch 1 oder 2, wobei die Harzzusammensetzung ferner anorganische Füllstoffe umfasst.

4.  Aufzugseil (1) gemäß Anspruch 3, wobei die anorganischen Füllstoffe entweder in faseriger oder plättchenartiger Form vorliegen.


**Revendications**

1.  Câble d'ascenseur (1), comprenant : un corps principal de câble ; et une couche de résine de revêtement qui revêt la périphérie du corps principal de câble, la couche de résine de revêtement comprenant un produit réticulé d'une composition de résine, dans lequel la composition de résine comprend un élastomère de polyuréthane thermoplastique et une aide de réticulation constituée d'un composé vinylique ayant deux ou plusieurs groupes vinyliques par molécule.

2.  Câble d'ascenseur (1), comprenant : un corps principal de câble ; et une couche de résine de revêtement qui revêt la périphérie du corps principal de câble, la couche de résine de revêtement comprenant un produit réticulé d'une composition de résine, dans lequel la composition de résine comprend un élastomère de polyuréthane thermoplastique obtenu à partir d'un polyol ayant un groupe vinylique pour chaque molécule, un polyisocyanate organique et un allongeur de chaîne.

3.  Câble d'ascenseur (1) selon la revendication 1 ou 2, dans lequel la composition de résine comprend en outre des charges inorganiques.

4.  Câble d'ascenseur (1) selon la revendication 3, dans lequel les charges inorganiques sont soit sous forme fibreuse, soit sous forme de plaque.

FIG. 1

FIG. 2

FIG. 3

**EP 2 615 054 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001262482 A
- JP 2004538382 A
- WO 2007128622 A
- JP 2009234791 A
- JP 2008106188 A
- WO 2003050348 A1

**Non-patent literature cited in the description**

- **GROSCH, K. A.** *Proc. Roy. Soc.,* 1963, vol. A274, 21